# EUROPEAN PATENT APPLICATION

(11) **EP 4 556 171 A1**
(43) Date of publication of application: **21.05.2025**
(21) Application number: 23210606.2
(22) Date of filing: 17.11.2023
(51) Int. Cl.: B25H 7/04, G01C 15/02

(54) **MARKING TOOL FOR MARKING A POINT OF INTEREST AND MARKING INFORMATION RELATED TO THE POINT OF INTEREST**

(71) Applicant: Hilti Aktiengesellschaft, 9494 Schaan (LI)
(72) Inventor: Sanchez Ruelas, Jafet, 9000 St. Gallen (CH)
(74) Representative: Hilti Aktiengesellschaft Corporate Intellectual Property

(57) **Abstract**

Marking tool configured to mark a point of interest on a surface 53 and to mark information related to the point of interest onto the surface 53, the marking tool comprising an elongated rod having a first end, a second end, and a center axis 40, a holding device, and an actuating device, wherein the marking tool is configured to be connected to a marking template device 33 including a marking template 51 having a template surface 52 configured to be placed on or near the surface 53 and having at least one marking element being formed as number, letter, character and/or symbol.

## Description

### Technical field

The present invention relates to a marking tool for marking a point of interest and marking information related to the point of interest according to the definition of claim 1 and to a marking system including that marking tool and a marking dispenser filled with a marking material and held in the marking tool according to the definition of claim 12.

### Background of the invention

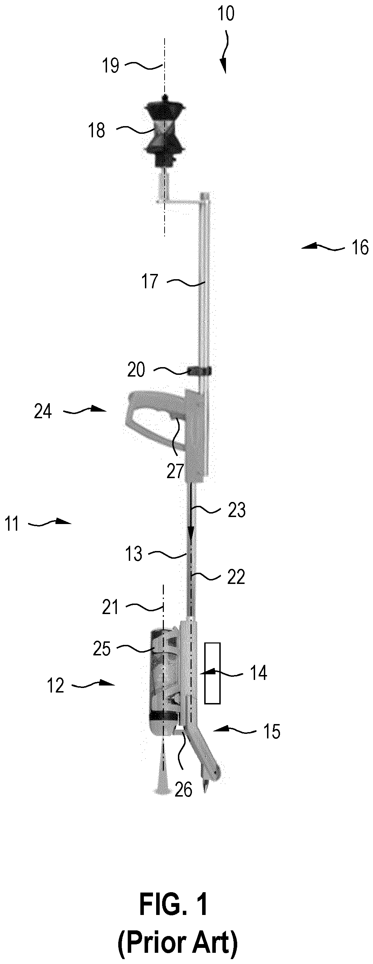

**FIG. 1** shows a marking system **10** known from prior art including a marking tool **11** and a marking dispenser **12** that is loaded to the marking tool 11. The marking dispenser 12 is an aerosol paint canister that contains paint dispensed by a nozzle. The aerosol paint canister is placed into the marking tool 11 upside down, such that the nozzle is proximate to the marking tool 11 and close to the surface of interest on which the paint is to be dispensed.

The marking tool 11 comprises an elongated rod **13,** a holding device **14** connected to the rod 13, and an actuating device **15** configured to actuate the loaded marking dispenser 12 to dispense the marking material. Furthermore, the marking tool 11 is connected to an extension device **16** including an extension arm **17** and an optical reflector **18** having a center axis **19.** For a vertical set-up of the marking tool 11, a bubble **20** is connected to the extension arm 17. The extension arm 17 is adapted to the holding device 14 such that, in a vertical set-up of the marking tool 11, the center axis 19 of the optical reflector 18 is aligned coincidently with an axis **21** of the loaded marking dispenser 12.

The elongated rod 13 includes a first end, a second end opposite of the first end, and a center axis **22** extending along a length direction **23** between the first and second ends. Incorporated at the first end of the rod 13 is a handle **24.** The holding device 14 includes a holder **25** configured to be loaded with the marking dispenser 12, the holder 25 being attached to the rod 13.

The actuating device 15 includes an actuator **26** configured to actuate the marking dispenser 12 to dispense the marking material, a mechanical trigger **27** that is proximate to the first end of the rod 13 and provided on the handle 24, and a mechanical connection disposed inside of the rod 13 and connecting the trigger 27 and actuator 26. When a user actuates the trigger 27, the actuator 26 is activated to actuate the nozzle of the paint canister, thus dispensing paint out of the paint canister.

The disadvantage of the known marking system 10 according to FIG. 1 is that the marking system 10 cannot precisely mark a point of interest onto a surface, and that it is not configured to mark information related to the point of interest onto the surface. The position of the point of interest must be estimated by the user, and additional information related to the point of interest must be marked manually.

### Summary of the invention

There is a need for a marking system including a marking tool and a marking dispenser that allows to precisely mark a point of interest onto a surface and to mark additional information related to the point of interest onto the surface. Preferably, the point of interest and the additional information related to the point of interest should be marked in a single activation of the marking tool by the user.

These objectives are achieved by realizing the features of the independent claim. Features which further develop the invention in an advantageous manner are described in the dependent claims.

The present invention relates to a marking tool configured to mark a point of interest on a surface and to mark information related to the point of interest onto the surface characterized in that the marking tool is configured to be connected to a marking template device, the marking template device including a marking template having a template surface configured to be placed on or near the surface and having at least one marking element being formed as number, letter, character and/or symbol.

The marking tool includes an elongated rod, a holding device connected to the rod and configured to hold the marking dispenser, and an actuating device having an actuator configured to actuate the marking dispenser to dispense the marking material. The marking template device connected to the marking tool allows to precisely mark a point of interest onto a surface and to mark additional information related to the point of interest onto the surface. The marking template device includes a marking template having a template surface and having at least one marking element being formed as number, letter, character and/or symbol.

The marking elements can be used to precisely mark a point of interest onto a surface and to mark additional information related to the point of interest onto the surface. Besides the use of different marking elements, such as numbers and/or letters, different colored marking materials can be used to differ between several points of interest marked onto a surface in a construction project.

Preferably, the marking tool is configured to be connected to a dot marking device, the dot marking device being configured to be connected to the rod and to create a dot marking at the center axis of the rod. The dot marking device allows to mark a point of interest that is located at the center axis of the rod of the marking tool.

Preferably, the marking template includes a reference element that is configured to be aligned with a laser marking being non-permanently marked on the surface. A marking template including a reference element allows to use the marking tool together with a laser plumping tool that marks a point of interest non-permanently on the surface. The marking tool will be arranged such that the reference element of the marking template is aligned coincidently with the laser marking of the laser plumping tool. The reference element allows to precisely mark a point of interest onto a surface.

In a preferred version, the marking template device is configured to be connected via a swivable connection to the rod to adapt an angle of inclination between the marking template and the rod, the angle of inclination being defined between the center axis of the rod and a normal direction of the template surface. The swivable connection between the marking template and the rod allows to use the marking tool in a vertical set-up although the surface to be marked is inclined. Furthermore, the marking tool can be used together with a laser plumping tool that may non-permanently mark a point of interest on the surface to be marked. To avoid that the vertical laser beam of the laser plumping tool is interrupted by the marking tool, the marking tool can be inclined and moved out of the range of the vertical laser beam via the swivable connection.

In a preferred version, the marking template device includes a template holder configured to be connected to the rod and the marking template configured to be connected to the template holder in a releasable manner. Using a template holder can reduce the effort for the user to exchange the marking template.

In a preferred version, the actuating device further includes a trigger configured to be actuated manually, the trigger being connected to the actuator via a mechanical connection and/or an electronic connection.

In a preferred version, the marking tool is further configured to be connected to an extension device that includes an extension arm and an optical reflector. A marking tool being connected to an extension device is configured to be used together with a laser instrument, such as, but not limited to, total stations. The marking tool is additionally used as pole to carry the optical reflector.

Preferably, the marking template includes a reference element that is configured to be coincident with a center axis of the optical reflector. In a vertical set-up of the marking tool, the reference element is coincident with the center axis of the optical reflector, and by actuating the marking dispenser the point of interest is marked via the reference element.

In a preferred version, the rod includes a first rod section and a second rod section, the holding device being connected to the first rod section and the actuator being connected to the second rod section, wherein the first rod section is movable relative to the second rod section along a length direction of the rod, the length direction being parallel to the center axis of the rod. A rod that is composed of a first rod section and a second rod section allows to actuate the marking dispenser via a pushing movement.

In a preferred version, the first rod section includes the first end of the rod, and the second rod section includes the second end of the rod.

In an alternative preferred version, the first rod section includes the first end and second end of the rod. A rod that is composed of a first rod section including the first and second end of the rod allows to actuate the marking dispenser without changing the length of the rod. This version is preferred for marking tool that should be combined with an extension device.

In a further aspect, the present invention is related to a marking system comprising the marking tool and a marking dispenser filled with a marking material, the marking dispenser configured to be held in the holding device of the marking tool. The marking system is composed of the marking tool and a marking dispenser filled with a marking material.

In a preferred version, the marking material includes at least one of paint, chalk, dye, and marking powder. The marking material that is filled into the marking dispenser can be adapted to the surface to be marked.

In a preferred version, the marking dispenser is a replaceable dispenser or a refillable dispenser or a replaceable and refillable dispenser. The properties of the marking dispenser that is held in the marking tool depend on the application of the marking tool. In case that a lot of different colors of marking material should be used, a replaceable dispenser is preferred.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows in a perspective view a marking system known from prior art including a marking tool and a marking dispenser held in the marking tool,
- FIGS. 2A, B: show a first exemplary version of a marking system according to the present invention including a marking tool, a marking dispenser held in the marking tool, and a marking template device connected to the marking tool,
- FIGS. 3A, B: show a first marking template (FIG. 3A) and a second marking template (FIG. 3B) to be used with the marking system of FIG. 2A,
- FIGS. 4A, B: show an enlarged fragmentary portion of the marking system of FIG. 2A illustrating the actuating mechanism of the marking tool,
- FIGS. 5A, B: show a dot marking device that may be connected to the marking tool,
- FIGS. 6A-C: show schematically three applications how the marking system of FIG. 2A can be used to mark a point of interest on a surface and to mark information related to the point of interest onto the surface,
- FIGS. 7A-C: show schematically three applications of a second exemplary version of a marking system according to the present invention including a marking tool, a marking dispenser held in the marking tool, and a marking template device connected to the marking tool, and
- FIGS. 8A-C: show schematically three applications of a third exemplary version of a marking system according to the present invention including a marking tool, a marking dispenser held in the marking tool, and a marking template device connected to the marking tool.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, the term "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of", or, when used in the claims, "consisting of" will refer to the inclusion of exactly one element of a number or list of elements. In general, the term "or" as used herein shall only be interpreted as indicating exclusive alternatives (ke. "one or the other but not both") when preceded by terms of exclusivity, such as "either", "one of", "only one of", or "exactly one of", "consisting essentially of", when used in the claims, shall have its ordinary meaning as used in the field of patent law.

As used herein in the specification and in the claims, the phrase "at least one" in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

The term "marking tool" refers to any apparatus, mechanism, or other device that employs a marking dispenser for causing a marking material to be dispensed. Additionally, the term "marking dispenser" refers to any apparatus, mechanism, or other device for dispensing and/or otherwise using, separately or in combination, a marking material. An example of a marking dispenser may include, but is not limited to, a pressurized canister of marking paint. The term "marking material" means any material, substance, compound, and/or element, used or which may be used separately or in combination to mark, signify, and/or indicate. Examples of marking materials may include, but are not limited to, paint, chalk, dye, and/or iron.

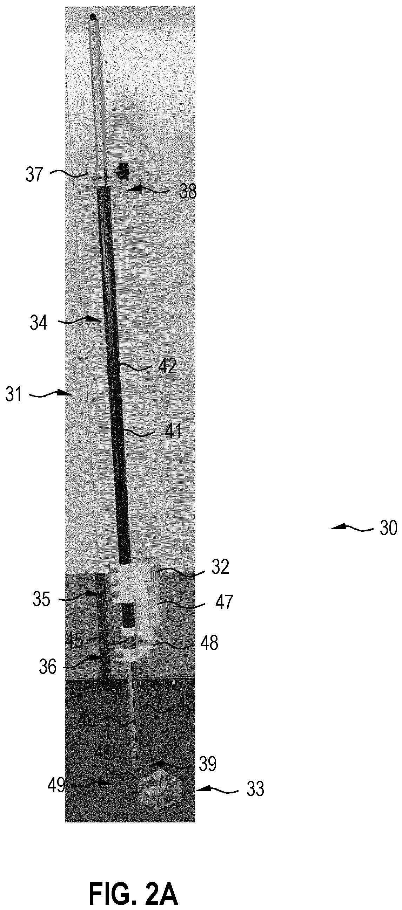

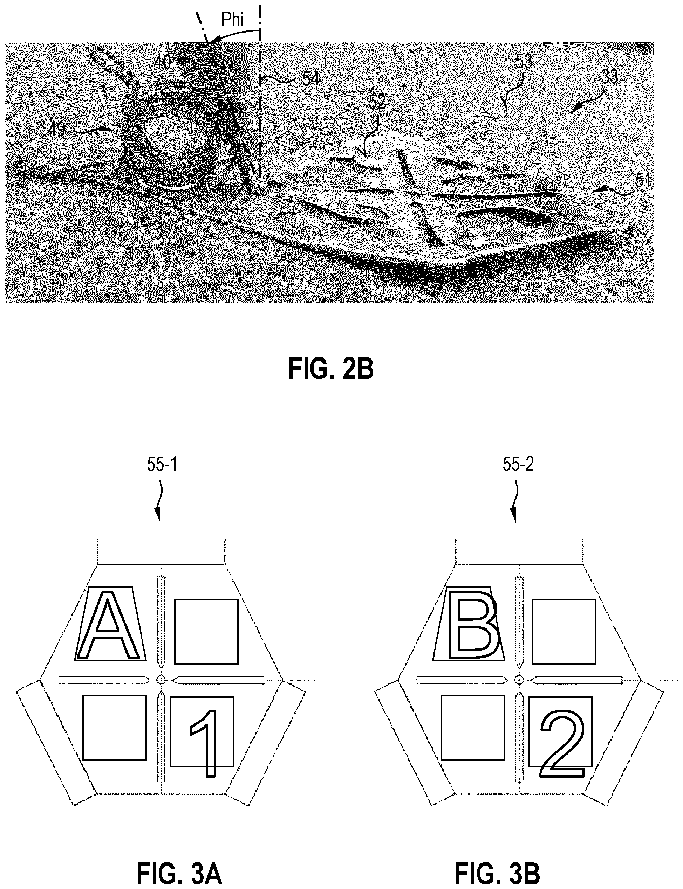

**FIGS. 2A****, B** show a first exemplary version of a marking system **30** according to the present invention including a marking tool **31,** a marking dispenser **32** held in the marking tool 31, and a marking template device **33** connected to the marking tool 31. FIG. 2A shows a perspective view of the marking system 30, and FIG. 2B an enlarged fragmentary portion of FIG. 2A illustrating the marking template device 33 connected in a swivable manner to the marking tool 31.

The marking tool 31 comprises an elongated rod **34,** a holding device **35** connected to the rod 34, and an actuating device **36** configured to actuate a loaded marking dispenser to dispense the marking material. Furthermore, the marking tool 31 may be connected to an extension device that is configured to hold an optical reflector. For a vertical set-up of the marking tool 31, an adjustable bubble **37** may be connected to the rod 34 or to an extension device that may be connected to the marking tool 31.

The rod 34 includes a first end **38,** a second end **39** opposite of the first end 38, and a center axis **40** extending along a length direction **41** between the first end 38 and second end 39, the length direction 41 being parallel to the center axis 40 of the rod 34. The rod 34 is composed of a first rod section **42** and a second rod section **43.** In the exemplary version shown in FIG. 2A, the second rod section 43 is provided partially in the first rod section 42, which is shiftable along the length direction 41 of the rod 34 relative to the second rod section 43. The first rod section 42 and second rod section 43 may be formed of an at least rigid material (rigid or strong), and may be formed of a lightweight material, such as, but not limited to, molded plastic, carbon fiber, and aluminum. The first and second rod sections 42, 43 may be circular, rectangular, square, or formed in any other appropriate design in cross-section.

To ensure that the marking material of the marking dispenser 32 is only dispensed when desired, a biasing spring **45** may be arranged between the first rod section 42 and second rod section 43, as shown in the exemplary version of FIG. 2A. In a relaxed mode of the biasing spring 45, the marking dispenser 32 cannot be actuated to dispense the marking material, and in a stressed mode of the biasing spring 45, the marking dispenser 32 is actuated to dispense the marking material.

At the second end 43 of the rod 34, a tip element **46** may be connected in a releasable manner, via a thread or any other suitable connection, to the rod 34; for different types of surfaces adapted tip elements may be used. To be able to mark a point of interest that is located at the center axis 40 of the rod 34, the tip element 46 may be replaced by a dot marking device, such as a dot marking device including a permanent marker or a punch element. The dot marking device may be connected to the rod 34 via a thread or any other suitable connection.

The holding device 35 is configured to hold the marking dispenser 32 and may be attached to the first rod section 42 by screws, rivets, adhesives, or any other suitable material. In the exemplary version shown in FIG. 2A, the holding device 35 includes a holder **47** that is configured to be loaded with the marking dispenser 32. However, it should be appreciated that the present invention is not limited to holding devices including one holder. Alternatively, the holding device 35 may include a first holder and a second holder, the first holder being configured to be loaded with a first marking dispenser and the second holder being configured to be loaded with a second marking dispenser.

The marking dispenser 32 may be a replaceable marking dispenser or a refillable marking dispenser or any other suitable marking dispenser. The marking dispenser 32 shown in FIG. 2A may be a replaceable aerosol paint canister of a commercially available type manufactured for the purpose of marking or the marking dispenser may be a specially designed paint canister that can generate an appropriate paint stream on the surface to be marked. The aerosol paint canister may dispense a stream of brightly colored paint through a nozzle generally along a vertical axis of the canister. However, it should be appreciated that the present invention is not limited to replaceable aerosol paint canister, as a marking material dispensed by the marking tool may be any material, substance, compound, and/or element, used to mark, signify, and/or indicate. Examples of marking materials may include, but are not limited to, paint, chalk, dye, and/or marking powder.

The actuating device 36 includes an actuator **48** configured to actuate a loaded marking dispenser to dispense the marking material. In the exemplary version shown in FIG. 2A, the actuator 48 is attached to the second rod section 43 by screws, rivets, adhesives, or any other suitable material. The marking tool 31 is activated manually by pushing the first rod section 42. In the relaxed mode of the biasing spring 45 shown in FIG. 2A, the marking dispenser 32 cannot be actuated to dispense the marking material. To dispense the marking material, the user must push the first rod section 42 along the length direction 41 of the rod 34. By pushing the first rod section 42, the marking dispenser 32 is shifted towards the actuator 48 until the nozzle of the marking dispenser 32 is depressed and a stream of colored paint is dispensed through the nozzle.

The marking template device 33 may be connected to the rod 34 in a fixed manner by screws, rivets, adhesives, or any other suitable material or in a swivable manner. In the exemplary version shown in FIG. 2A, the marking template device 33 is connected to the second rod section 43 in a swivable manner via a swivable connection **49.**

FIG. 2B shows an enlarged fragmentary portion of FIG. 2A illustrating the marking template device 33 that is connected via the swivable connection 49 to the marking tool 31. The marking template device 33 includes a marking template **51** having a template surface **52** and several marking elements that may be formed as number, letter, character, and/or symbol.

The marking template 51 is placed on a surface **53** to be marked. The swivable connection 49 allows to adapt an angle of inclination **Phi** between the marking template 51 and the rod 34, the angle of inclination Phi being defined between the center axis 40 of the rod 34 and a normal direction **54** of the template surface 52.

The marking template 51 contains four marking elements that contain information related to a point of interest, and five marking elements that mark the point of interest. The point of interest is marked by a circular opening located in the center of the marking template and by four V-shaped openings showing towards the point of interest.

The marking template device 33 may include a template holder that can be connected to the rod 34 and the marking template 51 can be connected in a releasable manner to the template holder. Using a template holder can reduce the effort for the user to exchange the marking template 51.

**FIGS. 3A****, B** show a first marking template **55** (FIG. 3A) and a second marking template **56** (FIG. 3B) to be used with the marking template device 33 of the marking system 30 of FIG. 2A.

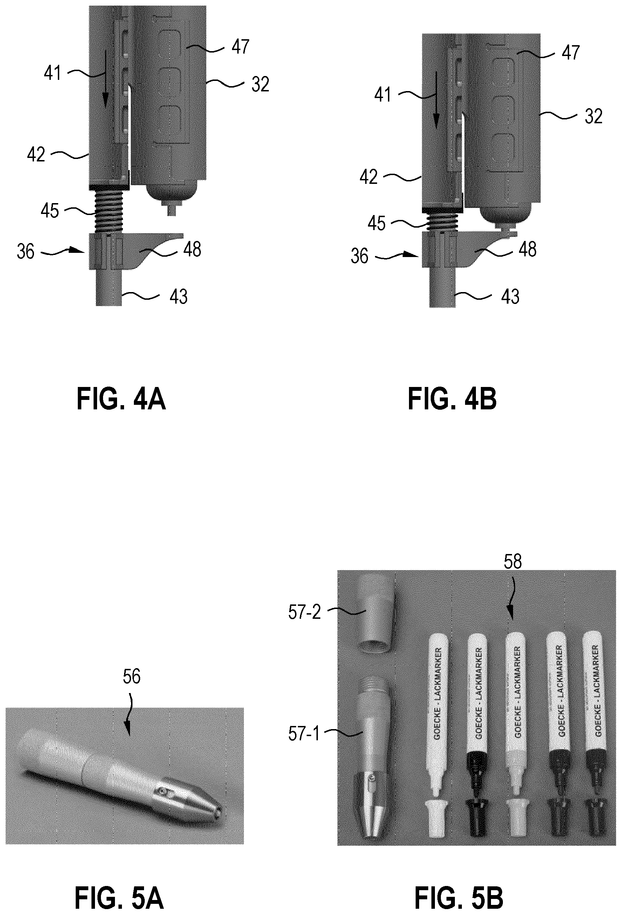

**FIGS. 4A****, B** show an enlarged fragmentary portion of the marking system 30 illustrating the actuating mechanism of the marking tool 31. The marking dispenser 32 is placed upside down into the holder 47. FIG. 4A shows the marking system 30 in a non-active position, in which the biasing spring 45 is arranged in its relaxed mode and the marking dispenser 32 is not actuated to dispense the marking material. FIG. 4B shows the marking system 30 in an active position, in which the biasing spring 45 is arranged in its stressed mode and the marking dispenser 32 is actuated to dispense the marking material.

To dispense the marking material, the user must push the first rod section 42 along the length direction 41 of the rod 34. By pushing the first rod section 42, the marking dispenser 32 is shifted towards the actuator 48 until the nozzle of the marking dispenser 32 is depressed and a stream of colored paint is dispensed through the nozzle along a vertical axis of the canister.

**FIGS. 5A****, B** show a dot marking device **60** that may be connected to a marking tool, such as the marking tool 31 shown in FIG. 2A. The dot marking device 60 may include a springbiased protective cover **61-1, 61-2,** in which a permanent marker **62** or a punch element can be arranged.

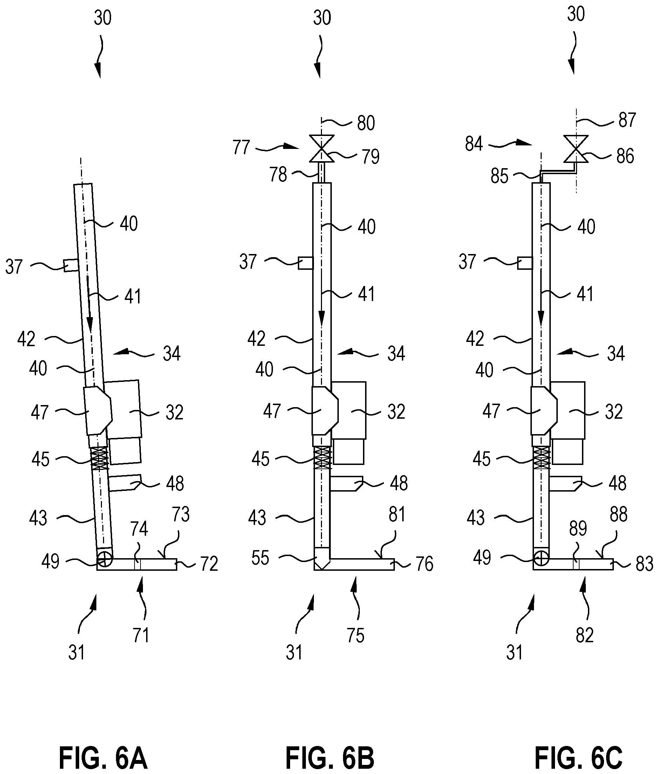

**FIGS. 6A-C** show schematically three applications how the marking tool 31 and the marking dispenser 32 of FIG. 2A can be used to precisely mark a point of interest on a surface and to mark information related to the point of interest onto the surface.

FIG. 6A shows a first application of the marking tool 31 and the marking dispenser 32 held in the marking tool 31. The marking tool 31 is connected to a marking template device 71 including a marking template **72.** To differentiate the marking template device 71 of the first application from other applications, the marking template device 71 is called "first marking template device", and its components are identified by the extension "first".

The first application shown in FIG. 6A is configured to be used together with a laser instrument, such as a total station, and a layout accessory that includes a laser plumping tool configured to non-permanently mark a point of interest via a laser dot or a laser crosshair on a surface. The first marking template 72 includes a template surface **73** having several openings; one of the openings is a reference element **74** that should be arranged by the user coincidently with the laser marking of the vertical laser beam. The reference element 74 may be a crosshair, a circle, or any other appropriate symbol. To avoid that the vertical laser beam is interrupted by the marking tool 31, the marking tool 31 can be inclined via the swivable connection 49 and moved out of the range of the vertical laser beam.

FIG. 6B shows a second application of the marking tool 31 and the marking dispenser 32 held in the marking tool 31. The marking tool 31 is connected to a marking template device **75** including a marking template **76,** and an extension device **77** including an extension arm **78** and an optical reflector **79** having a center axis **80.** To differentiate the marking template device 75 and extension device 77 of the second application from other applications, the marking template device 75 is called "second marking template device", the extension device 77 is called "second extension device", and the components of the second marking template device 75 and second extension device 77 are identified by the extension "second".

The second application of the marking tool 31 shown in FIG. 6B is configured to be used together with a laser instrument, such as a total station. In a vertical set-up of the marking tool 31, the center axis 80 of the second optical reflector 79 is coincident with the center axis 40 of the rod 34, and the point of interest to be marked is arranged on the surface at the center axis 40 of the rod 34. To allow that the point of interest can be marked, the dot marking device 55 may be connected to the marking tool 31 and may substitute a conventional tip element. The second marking template 76 includes a template surface **81** and at least one marking element that contains information related to the point of interest.

FIG. 6C shows a third application of the marking tool 31 and the marking dispenser 32 held in the marking tool 31. The marking tool 31 is connected to a marking template device **82** including a marking template **83,** and an extension device **84** including an extension arm **85** and an optical reflector **86** having a center axis **87.** To differentiate the marking template device 82 and extension device 84 of the third application from other applications, the marking template device 82 is called "third marking template device", the extension device 84 is called "third extension device", and the components of the third marking template device 82 and third extension device 84 are identified by the extension "third".

The third application of the marking tool 31 shown in FIG. 6C is also configured to be used together with a laser instrument, such as a total station. In a vertical set-up of the marking tool 31, the intersection point between the center axis 87 of the third optical reflector 86 and the surface determines the point of interest that should be marked. The third marking template 83 includes a template surface **88** having several openings; one of the openings is a reference element **89** that is coincident with the center axis 87 of the third optical reflector 86. The reference element 89 may be a crosshair, a circle, or any other appropriate symbol.

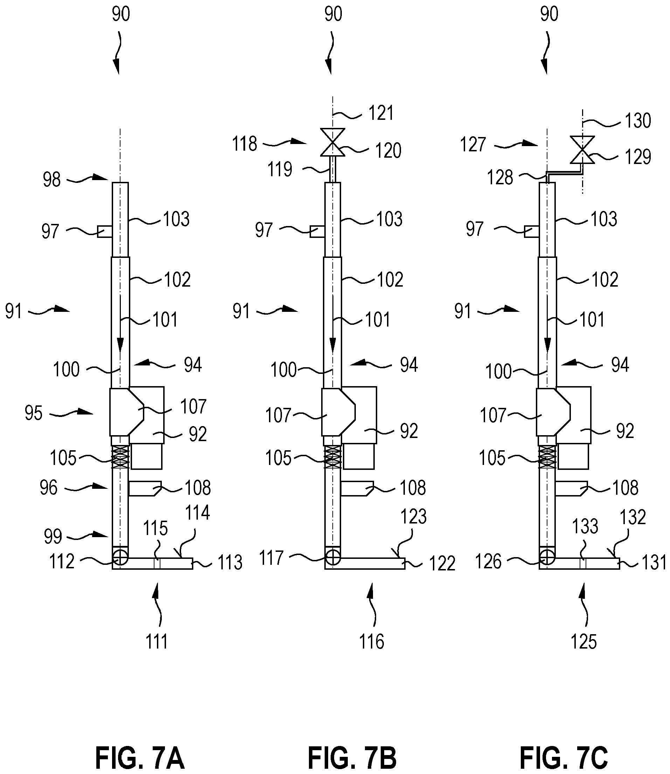

**FIGS. 7A-C** show schematically three applications of a second exemplary version of a marking system **90** according to the present invention including a marking tool **91,** a marking dispenser **92** held in the marking tool 91, and a marking template device connected to the marking tool 91.

The marking tool 91 comprises an elongated rod **94,** a holding device **95** connected to the rod 94, and an actuating device **96** configured to actuate a loaded marking dispenser to dispense the marking material. For a vertical set-up of the marking tool 91, a bubble **97** may be connected to the rod 94; preferably, the bubble 97 may be adjustable along the rod 94.

The rod 94 includes a first end **98,** a second end **99** opposite of the first end 98, and a center axis **100** extending along a length direction **101** between the first end 98 and second end 99, the length direction 101 being parallel to the center axis 100 of the rod 94. The rod 94 is composed of a first rod section **102** and a second rod section **103.** In the exemplary version shown in FIGS. 7A-C, the second rod section 103 is provided partially in the first rod section 102, which is shiftable along the length direction 101 of the rod 94 relative to the second rod section 103. The first rod section 102 and second rod section 103 may be formed of an at least rigid material (rigid or strong), and may be formed of a lightweight material, such as, but not limited to, molded plastic, carbon fiber, and aluminum. The first and second rod sections 102, 103 may be circular, rectangular, square, or formed in any other appropriate design in cross-section.

The holding device 95 is connected to the first rod section 102 and the actuating device 96 is connected to the second rod section 103. To ensure that the marking material of the marking dispenser 92 is only dispensed when desired, a biasing spring **105** may be arranged between the first rod section 102 and second rod section 103. In a relaxed mode of the biasing spring 105, the marking dispenser 92 cannot be actuated to dispense the marking material, and in a stressed mode of the biasing spring 105, the marking dispenser 92 is actuated to dispense the marking material.

The holding device 95 includes a holder **107** configured to be loaded with the marking dispenser 92, the holder 107 may be attached to the first rod section 102 by screws, rivets, adhesives, or any other suitable material. The actuating device 96 includes an actuator **108** configured to actuate a loaded marking dispenser to dispense the marking material, the actuator 108 may be attached to the second rod section 103 by screws, rivets, adhesives, or any other suitable material.

The marking tool 91 is activated manually by pushing the first rod section 102. In the relaxed mode of the biasing spring 105, the marking dispenser 92 cannot be actuated to dispense the marking material. To dispense the marking material, the user must push the first rod section 102 along the length direction 101 of the rod 94. By pushing the first rod section 102, the marking dispenser 92 is shifted towards the actuator 108 until the nozzle of the marking dispenser 92 is depressed and a stream of colored paint is dispensed through the nozzle.

FIG. 7A shows a first application of the marking tool 91 and the marking dispenser 92, the marking tool 91 being connected to a first marking template device **111** via a first connection **112.** The first marking template device 111 includes a first marking template **113** having a template surface **114** and several marking elements that may be formed as openings in the template surface 114 or as alternative forms. At least one opening defines a reference element **115** that should be used by the user to position the first marking template 113, wherein the reference element 115 is configured to be aligned coincidently with the point of interest to be marked.

FIG. 7B shows a second application of the marking tool 91 and the marking dispenser 92, the marking tool 91 being connected at the first end 98 of the rod 94 to a second marking template device **116** via a second connection **117** and at the second end 99 of the rod 94 to a second extension device **118** including a second extension arm **119** and a second optical reflector **120** having a center axis **121.** The second extension arm 119 is configured to connect the second optical reflector 120 to the marking tool 91, wherein the center axis 121 of the second optical reflector 119 being aligned coincidently with the center axis 100 of the rod 94.

The second marking template device 116 includes a second marking template **122** having a template surface **123** and several marking elements that may be formed as openings in the template surface 123 or as alternative forms. In the second application of the marking tool 91, the point of interest to be marked is arranged at the center axis 100 in a vertical orientation of the marking tool 91. To allow that the point of interest itself can be marked, the dot marking device 60 may be connected to the marking tool 91 in a releasable manner via a thread or any other type of connection.

FIG. 7C shows a third application of the marking tool 91 and the marking dispenser 92, the marking tool 91 being connected at the first end 98 of the rod 94 to a third marking template device **125** via a third connection **126** and at the second end 99 of the rod 94 to a third extension device **127** including a third extension arm **128** and a third optical reflector **129** having a center axis **130.** The third extension arm 128 is configured to connect the third optical reflector 129 to the marking tool 91, wherein the center axis 130 of the third optical reflector 129 being aligned eccentrically to the center axis 100 of the rod 94.

The third marking template device 125 includes a third marking template **131** having a template surface **132** and several marking elements that may be formed as openings in the template surface 132 or as alternative forms. In the third application of the marking tool 91, the point of interest to be marked is arranged at the center axis 130 of the third optical reflector 129 in a vertical orientation of the marking tool 91. To mark the point of interest on the surface, the several openings in the template surface 132 include at least one reference element 133 that is coincident with the center axis 130 of the optical reflector 129.

The first marking template device 111, the second marking template device 116, and the third marking template device 125 are summarized as marking template devices. The components of the marking template devices 111, 116, 125 are identified by using the extension first, second, and third to differ between the three applications of the marking tool 91.

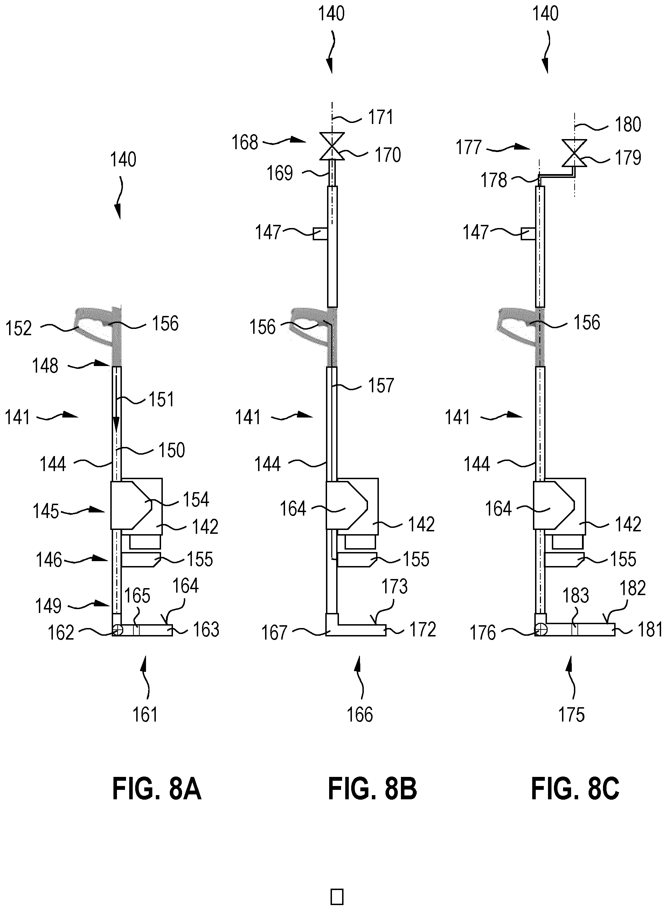

**FIGS. 8A-C** show schematically three applications of a third exemplary version of a marking system **140** according to the present invention including a marking tool **141,** a marking dispenser **142** held in the marking tool 141, and a marking template device connected to the marking tool 141.

The marking tool 141 comprises an elongated rod **144,** a holding device **145** connected to the rod 144, and an actuating device **146** configured to actuate a loaded marking dispenser to dispense the marking material. For a vertical set-up of the marking tool 141, a bubble **147** may be connected to the marking tool 141; preferably, the bubble 147 may be adjustable along the rod 144 or an extension device that may be connected to the marking tool 141.

The rod 144 includes a first end **148,** a second end **149** opposite of the first end 148, and a center axis **150** extending along a length direction **151** between the first end 148 and second end 149, the length direction 151 being parallel to the center axis 150 of the rod 144. The rod 144 may be formed of an at least rigid material (rigid or strong), and may be formed of a lightweight material, such as, but not limited to, molded plastic, carbon fiber, and aluminum. The rod 144 may be circular, rectangular, square, or formed in any other appropriate design in cross-section perpendicular to the center axis 150 of the rod 144.

Incorporated at the first end of the rod 144 is a handle **152,** which provides a convenient grip for the user. The handle 144 may be formed of an injection-molded plastic or any other appropriate material and may be attached to the rod 144 by screws, rivets, adhesives, or any other suitable material.

The holding device 146 includes a holder **154** configured to be loaded with the marking dispenser 142, the holder 154 may be attached to the rod 144 by screws, rivets, adhesives, or any other suitable material. The actuating device 146 includes an actuator **155** configured to actuate the marking dispenser 142 to dispense its marking material, a trigger **156,** and a connection **157** that connects the trigger 156 and actuator 155. When a user actuates the trigger 156, the actuator 155 is activated via the connection 157 to actuate the nozzle of the marking dispenser 142, thus dispensing paint out of the paint canister.

In the exemplary version shown in FIGS. 8A-C, the trigger 156 is a mechanical trigger that is proximate to the first end 148 of the rod 144 and provided on the handle 152. The actuator 155 may include a holding-down element that depresses a nozzle of the marking dispenser 142 when activated. However, any mechanism may be used to actuate the nozzle. The actuator may be connected to the trigger via a mechanical connection, such as a Bowden cable, in which case depressing the trigger may cause the actuator to depress the nozzle. However, the trigger may also, or alternatively, trigger the actuator via an electronic connection that may be a wired or wireless connection. In case of an electronic connection, the actuator may include a mechanism for generating a force necessary to depress the nozzle of the marking dispenser.

FIG. 8A shows a first application of the marking tool 141 and the marking dispenser 142, the marking tool 141 being connected to a first marking template device **161** via a first connection **162.** The first marking template device 161 includes a first marking template **163** having a template surface **164** and several marking elements that may be formed as openings in the template surface 164 or as alternative forms. At least one opening defines a reference element **165** that should be used by the user to align the reference element coincidently with the laser marking of a laser plumbing tool.

FIG. 8B shows a second application of the marking tool 141 and the marking dispenser 142, the marking tool 141 being connected at the first end 148 of the rod 144 to a second marking template device **166** via a second connection **167** and at the second end 149 of the rod 144 to a second extension device **168** including a second extension arm **169** and a second optical reflector **170** having a center axis **171.** The second extension arm 169 is configured to connect the second optical reflector 170 to the marking tool 141, the center axis 171 of the second optical reflector 170 being aligned coincidently with the center axis 150 of the rod 144.

The second marking template device 166 includes a second marking template **172** having a template surface **173** and several marking elements that may be formed as openings in the template surface 173 or as alternative forms. In the second application of the marking tool 141, the point of interest to be marked is arranged at the center axis 171 of the second optical reflector 170 in a vertical orientation of the marking tool 141.

FIG. 8C shows a third application of the marking tool 141 and the marking dispenser 142, the marking tool 141 being connected at the first end 148 of the rod 144 to a third marking template device **175** via a third connection **176** and at the second end 149 of the rod 144 to a third extension device **177** including a third extension arm **178** and a third optical reflector **179** having a center axis **180.** The third extension arm 178 is configured to connect the third optical reflector 179 to the marking tool 141, the center axis 180 of the third optical reflector 179 being aligned eccentrically to the center axis 150 of the rod 144.

The third marking template device 176 includes a third marking template **181** having a template surface **182** and several marking elements that may be formed as openings in the template surface 182 or as alternative forms. In the third application of the marking tool 141, the point of interest to be marked is arranged at the center axis 180 of the third optical reflector 179 in a vertical orientation of the marking tool 141. To mark the point of interest on the surface, the several openings in the template surface 182 include at least one reference element 183 that is coincident with the center axis 180 of the optical reflector 179.

The marking dispensers 32, 92, 142 used for the marking systems 30, 90, 140 are aerosol paint canisters of a commercially available type widely manufactured for marking. However, it should be appreciated that the present invention is not limited to marking dispensers that are formed as aerosol paint canister and that are loaded to the holding device of the marking tool. Alternatively, the marking dispenser may be integrated in the marking tool and the marking material may be refillable.

## Claims

1. A marking tool (31; 91; 141) configured to mark a point of interest (POI) on a surface (53) and to mark information related to the point of interest (POI) onto the surface (53), the marking tool (31; 91; 141) comprising:
▪ an elongated rod (34; 94; 144) having a first end (38; 98; 148), a second end (39; 99; 149) opposite of the first end (38; 98; 148), and a center axis (40; 100; 150),
▪ a holding device (35; 95; 145) that is connected to the rod (34; 94; 144), the holding device (35; 95; 145) including a holder (47; 107; 154) configured to hold a marking dispenser (32; 92; 142) filled with a marking material, and
▪ an actuating device (36; 96; 146) including an actuator (48; 108; 155) configured to actuate a marking dispenser (32; 92; 142) to dispense the marking material,
**characterized in that** the marking tool (31; 91; 141) is configured to be connected to a marking template device (33; 71, 75, 82; 111, 116, 125; 161, 166, 175), the marking template device including a marking template (51; 72, 76, 83; 113, 122, 131; 163, 172, 181) having a template surface (52; 73, 81, 88; 114, 123, 132; 164, 173, 182) configured to be placed on or near the surface (53) and having at least one marking element being formed as number, letter, character and/or symbol.

2. The marking tool according to claim 1, wherein the marking tool (31; 91; 141) is configured to be connected to a dot marking device (55), the dot marking device (55) being configured to be connected to the rod (34; 94; 144) and to create a dot marking at the center axis (40; 100; 150) of the rod (34; 94; 144).

3. The marking tool according to any of claims 1 to 2, wherein the marking template (72; 113; 163) includes a reference element (74; 115; 165) that is configured to be aligned with a laser marking being non-permanently marked on the surface (53).

4. The marking tool according to any of claims 1 to 3, wherein the marking template device is configured to be connected via a swivable connection (49; 112, 117, 126; 162, 167, 176) to the rod (34; 94; 144) to adapt an angle of inclination (Phi) between the marking template and the rod (34; 94; 144), the angle of inclination (Phi) being defined between the center axis (40; 100; 150) of the rod (34; 94; 144) and a normal direction (54) of the template surface (52; 73, 81, 88; 114, 123, 132; 164, 173, 182).

5. The marking tool according to any of claims 1 to 4, wherein the marking template device includes a template holder configured to be connected to the rod (34; 94; 144) and the marking template configured to be connected to the template holder in a releasable manner.

6. The marking tool according to claim 1, wherein the actuating device (146) further includes a trigger (156) configured to be actuated manually, the trigger (156) being connected to the actuator (155) via a mechanical and/or electronic connection (157).

7. The marking tool according to any of claims 1 to 6, wherein the marking tool (31; 91; 141) is further configured to be connected to an extension device (77, 84; 118, 127; 168, 177) that includes an extension arm (78, 85; 119, 128; 169, 178) and an optical reflector (79, 86; 120, 129; 170, 179).

8. The marking tool according to claim 7, wherein the marking template (83; 131; 181) includes a reference element (89; 133; 183) that is configured to be coincident with a center axis (87; 130; 180) of an optical reflector (86; 129; 179) connected to the marking tool (31; 91; 141), the center axis (87; 130; 180) of the optical reflector (86; 129; 179) being eccentric to the center axis (40; 100; 150) of the rod (34; 94; 144).

9. The marking tool according to any of claims 1 to 8, wherein the rod (34; 94) includes a first rod section (42; 102) and a second rod section (43; 103), the holding device (35; 95) being connected to the first rod section (42; 102) and the actuator (48; 108) being connected to the second rod section (43; 103), wherein the first rod section (42; 102) is movable relative to the second rod section (43; 103) along a length direction (41; 101) of the rod (34; 104), the length direction (41; 101) being parallel to the center axis (40; 100) of the rod (34; 94).

10. The marking tool according to claim 9, wherein the first rod section (42) includes the first end (38) of the rod (34), and the second rod section (43) includes the second end (39) of the rod (34).

11. The marking tool according to claim 9, wherein the first rod section (102) includes the first end (98) and second end (99) of the rod (94).

12. A marking system (30; 90; 130) configured to mark a point of interest (POI) on a surface (53) and to mark information related to the point of interest (POI) onto the surface (53), the marking system (30; 90; 130) comprising:
▪ the marking tool (31; 91; 141) according to any one of claims 1 to 11, and
▪ a marking dispenser (32; 92; 142) filled with a marking material, the marking dispenser (32; 92; 142) configured to be held in the holding device (35; 95; 145) of the marking tool (31; 91; 141).

13. The marking system according to claim 12, wherein the marking material includes at least one of paint, chalk, dye, and marking powder.

14. The marking system according to any of claims 12 to 13, wherein the marking dispenser (32; 92; 142) is a replaceable dispenser, a refillable dispenser, or a replaceable and refillable dispenser.
